# EUROPÄISCHE PATENTANMELDUNG

(11) **EP 3 420 862 A1**
(43) Veröffentlichungstag der Anmeldung: **02.01.2019**
(21) Anmeldenummer: 18182823.7
(22) Anmeldetag: 11.07.2018
(51) Int. Cl.: A47J 31/44, A47J 31/52, G07F 13/06

(54) **PROGRAMMGESTEUERTER GETRÄNKEBEREITER**

(30) Priorität: 03.08.2017 DE 102017117633
(71) Anmelder: Miele & Cie. KG, 33332 Gütersloh (DE)
(72) Erfinder: Pötter, Berthold, 33332 Gütersloh (DE); Jungclaus, Dirk, 59302 Oelde (DE); Wolbeck, Michael, 33330 Gütersloh (DE)

(57) **Zusammenfassung**

Bedien- und Anzeigevorrichtung für einen programmgesteuerten Getränkebereiter und Getränkebereiter
Die Erfindung betrifft einen programmgesteuerter Getränkebereiter (1) mit einer Steuereinrichtung (18) für einen zur Zubereitung von heißen Getränken (31) aus zumindest zwei Zutaten (C, W), mit einer mit der Steuereinrichtung in Wirkverbindung stehenden Bedien- und Anzeigevorrichtung (4, 5) mit einem Display (5), auf dem verschiedene Getränke als Feld anzeigbar und mittels Betätigung einer menuegeführten Bedienhandhabe (4) durch einen Benutzer auswählbar und/oder veränderbar sind,

Um dem Benutzer eine einfach zu handhabende Möglichkeit zur Erstellung von individuellen Getränken zu bieten, ist die Bedien- und Anzeigevorrichtung (4, 5) dazu ausgebildet,
- zumindest eines der auszuwählenden Getränke als individuell zu konfigurierendes Getränk bereitzustellen, und ein Untermenue zur Auswahl bereitzustellen, das zur Auswahl und Eingabe von Parametern sowie für die Auswahl von vordefinierten Getränkezubereitungskomponenten ausgebildet ist;
- das Untermenue mehrmals wiederholt zur Aktivierung bereit zu stellen, um eine Kombination der auszuwählenden, vordefinierten Getränkezubereitungskomponenten als jeweilige Teilmenge zu dem individuellen Getränk zu ermöglichen und
- die Einstellungen für das individuell konfigurierbare Getränk für nachfolgende Auswahl oder Aktivierung zu speichern zur nachfolgenden Steuerung für die Zubereitung des individuell konfigurierten Getränks

## Beschreibung

Die Erfindung betrifft einen programmgesteuerten Getränkebereiter mit einer Steuereinrichtung für einen zur Zubereitung von vorzugsweise heißen Getränken aus zumindest zwei Zutaten, mit einer mit der Steuereinrichtung in Wirkverbindung stehenden Bedien- und Anzeigevorrichtung mit einem Display, auf dem verschiedene Getränke als Feld anzeigbar und mittels Betätigung einer menuegeführten Bedienhandhabe durch einen Benutzer auswählbar und/oder veränderbar sind.

Getränkebereiter, die als sogenannte Vollautomaten für die Zubereitung verschiedener Heißgetränke ausgebildet sind, benötigen eine Bedienvorrichtung, mit der der Benutzer sein Getränk auswählen oder hinsichtlich der Zutaten verändern kann. Hierbei sind verschiedene Möglichkeiten der Bedienung bekannt, beispielsweise eine Mehrzahl von Drucktasten, denen jeweils eine Auswahl oder Funktion hinterlegt ist. Hierbei muss der Benutzer genau die Bedeutung der jeweiligen Drucktasten erfassen, damit er die richtige Auswahl hinsichtlich seines Getränkes dem Gerät übermitteln kann.

Aus der WO 2007/003062 A1 ist ein Getränkebereiter mit einer Bedienvorrichtung bekannt, welche ein berührungsempfindliches Display zur Anzeige von Auswahlmöglichkeiten umfasst. Die hier offenbarte Bedienvorrichtung ist so organisiert, dass die Auswahl und Einstellung des Getränkes über mehrere Menüebenen erfolgt. Ferner wird ein Zubereitungsprozess nach dem Aktivieren der Zubereitung visuell dargestellt.

Die EP 1 477 094 A1 offenbart einen programmgesteuerten Getränkebereiter, bei dem mehrere sogenannte Nutzerprofile abgespeichert werden. Ein Nutzerprofil definiert dabei eine für einen Nutzer zugeordnete Getränkezubereitung, wobei einige Parameter individuell angepasst sind. Das bedeutet, dass für einen anderen Nutzer dieses individuell konfigurierte Getränk nicht zur Auswahl steht, er muss sich sein Getränk selber konfigurieren. Dies ist recht umständlich, weil die Parametrierung umfangreiche Kenntnisse hinsichtlich der Getränkezubereitung voraussetzt.

Insgesamt kann es bei den vorbekannten Bedienvorrichtungen vorkommen, dass der Benutzer mit dem Angebot an Auswahl, - und Parametrierungsmöglichkeiten überfordert ist oder dass er aufgrund der gegebenen Unübersichtlichkeit falsche Einstellungen vornimmt.

Der Erfindung liegt somit die Aufgabe zu Grunde, einen programmgesteuerten Getränkebereiter mit einer Bedien- und Anzeigevorrichtung bereitzustellen, bei dem die Auswahl und Konfiguration von individuell zuzubereitenden Getränken für den Benutzer einfach und übersichtlich dargeboten wird.

Erfindungsgemäß wird zumindest diese Aufgabe durch einen programmgesteuerten Getränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Die mit der Erfindung erreichbaren Vorteile bestehen darin, dass aufgrund einer übersichtlichen Benutzerführung auf einfache Weise eine Vielzahl von Möglichkeiten der individuellen Getränkezusammenstellung bereitgestellt wird. Eine Auswahl bzw. Veränderung oder Parametrierung des für den Benutzer bevorzugten Getränkes wird dabei mittels vorkonfigurierter Teilblöcke sehr einfach dargeboten. Genaue Kenntnisse über einzelne Zutaten oder Parameter sind nicht notwendig. Ferner ist die Eingewöhnung an die Bedienphilosophie extrem kurz, da für die individuellen Einstellungen für das frei zu konfigurierende Getränk keine umständlichen und unübersichtlichen Bedienhandlungen notwendig sind. Dem Benutzer werden aufgrund der Menueführung sehr übersichtlich und leicht verständlich die zur Auswahl stehenden Getränkeanteile oder Zutatenanteile dargestellt. Auch die nachträgliche Parametrierung dieser Einzelkomponenten erfolgt menuegeführt, sodass hierbei Veränderungen in sinnvollen Grenzen ermöglicht werden. Die Möglichkeiten, Fehleinstellungen vorzunehmen, sind dabei sehr gering. Insgesamt wird dem Benutzer eine einfach zu handhabende Möglichkeit zur Erstellung von individuellen Getränken geboten.

Hierzu ist die Bedien- und Anzeigevorrichtung dazu ausgebildet,
- zumindest eines der auszuwählenden Getränke als individuell zu konfigurierendes Getränk bereitzustellen, und ein Untermenue zur Auswahl bereitzustellen, das zur Auswahl und Eingabe von Parametern sowie für die Auswahl von vordefinierten Getränkezubereitungskomponenten ausgebildet ist;
- das Untermenue mehrmals wiederholt zur Aktivierung bereit zu stellen, um eine Kombination der auszuwählenden, vordefinierten Getränkezubereitungskomponenten als jeweilige Teilmenge zu dem individuellen Getränk zu ermöglichen und
- die Einstellungen für das individuell konfigurierbare Getränk für nachfolgende Auswahl oder Aktivierung zu speichern zur nachfolgenden Steuerung für die Zubereitung des individuell konfigurierten Getränks.

In einer zweckmäßigen Ausführung ist die Bedien- und Anzeigevorrichtung als berührungsempfindliches Display ausgebildet ist zur Bereitstellung der Funktion einer Bedienhandhabe. Hierbei werden die Parameter und Einstellmöglichkeiten symbolisch auf dem Bildschirm angezeigt, sodass der Benutzer durch Berührung der ausgesuchten Symbole oder Angaben seine Auswahl trifft.

In einer insgesamt zweckmäßigen Ausführung ist in einem Untermenue für das frei zu konfigurierbare Getränk die Gesamtmenge des Getränks einstellbar, beispielsweise durch eine Mengeneingabe mittels einer Zahl in Millilitern oder einer anderen Volumeneinheit. Dies ist besonders wünschenswert, weil sich die Gewohnheiten hinsichtlich der Gesamtmenge des Getränks oft unterschiedlich darstellen.

In einer vorteilhaften Weiterbildung ist das berührempfindliche Display dazu ausgebildet, eine Berührgeste auf dem berührempfindlichen Display auf einem dargestellten Behältersymbol zu erfassen, wodurch die Gesamtmenge des Getränkes in Abhängigkeit der Berührposition auf dem angezeigten Behältersymbol zumindest in etwa proportional einstellbar ist. Dabei kann als weitere Ausgabe ein Volumenmaß auf dem Bildschirm angezeigt werden, beispielsweise eine Anzahl von normalen Tassengrößen oder Werte in Milliliter oder Liter. Die Wischbewegung zum Vergrößern eines Behältersymbols zum Vergrößern der Gesamtmenge oder zum Verkleinern des Behältersymbols zum Verringern der Gesamtmenge ist für jeden Benutzer selbst erklärend und dadurch sehr einfach zu handhaben.

In einer weiteren, vorteilhaften Ausführung der Erfindung ist das berührempfindliche Display dazu ausgebildet, ein Untermenue für die Auswahl von vorkonfigurierten Getränkezubereitungen bereitzustellen. Damit werden bereits bekannte Getränkezubereitungen zur Auswahl oder als Teilkomponente für ein zu konfigurierendes Getränk angeboten.

In einer weiteren, insgesamt vorteilhaften Ausführung ist das berührempfindliche Display dazu ausgebildet, ein Untermenue für die Auswahl zum wiederholten Aufrufen eines Untermenues bereitzustellen, welches für weitere Einstellungen bezüglich der ausgewählten Getränkezubereitung dient oder zum Beenden des Konfiguriervorgangs ausgebildet ist. Damit lassen sich die bereits vorhandenen Getränkezubereitungsteile mehrfach für ein einziges Getränk kombiniert werden. Beispielsweise zweimal Espresso, einmal heißes Wasser und einmal Milchschaum für einen großen, selbst kreierten Cappuccino ohne Milch.

In einer anderen, insgesamt bevorzugten Ausführung ist die Bedien- und Anzeigevorrichtung mit dem berührempfindlichen Display dazu ausgebildet eine Symbolanzeige zur Eingabe der Konfiguration bereitzustellen. Hierbei werden Piktogramme zur Auswahl angeboten, die mittels einer Wischbewegung einem dargestellten Getränkesymbol zugeführt werden können. Damit stellt der Benutzer aus Teilkomponenten oder Blöcken, die als selbsterklärendes Symbol auf dem Display dargeboten werden, sein individuelles Getränk zusammen. Sehr viele Kombinationen lassen sich auf extrem einfache Weise vom Benutzer selbst realisieren. Kompliziertes Studieren der Gebrauchsanleitung ist dazu nicht notwendig.

In einer weiteren, zweckmäßigen Ausführung ist die Bedien- und Anzeigevorrichtung mit dem berührempfindlichen Display dazu ausgebildet, eine Balkenanzeige oder Werteeingabe mittels eines Ziffernblocks auf dem Display bereitzustellen. Mit diesen anderen Darstellungen können noch mehr Einstellmöglichkeiten dem Benutzer zur Verfügung gestellt werden, ohne dass die Bildschirmeingabe mit Untermenüs die Übersichtlichkeit verliert. Diese Darstellung entspricht einem sogenannten Expertenmodus, in dem weitere Parametereingaben oder Grundeinstellungen, wie Initialeinstellungen für die einzelnen, auszuwählenden Getränke, vorgenommen werden können. Ferner werden hier Einstellungen, beispielsweise Grund- oder Initialeinstellungen, vorgenommen, die besser verständlich nummerisch oder textuell darstellbar sind. Dies sind unter anderem Mengenangaben oder sonstige Benennungen von Parametern. Manche Benutzer bevorzugen auch solche nummerischen oder textuellen Darstellungen gegenüber reinen Piktogrammdarstellungen.

Ein Ausführungsbeispiel der Erfindung ist in den Zeichnungen rein schematisch dargestellt und wird nachfolgend näher beschrieben. Es zeigen
- Fig. 1:: einen Getränkebereiter mit bereitgestelltem Getränkegefäß und
- Fig. 2 bis 9:: Darstellungen für verschiedene Bedienebenen.

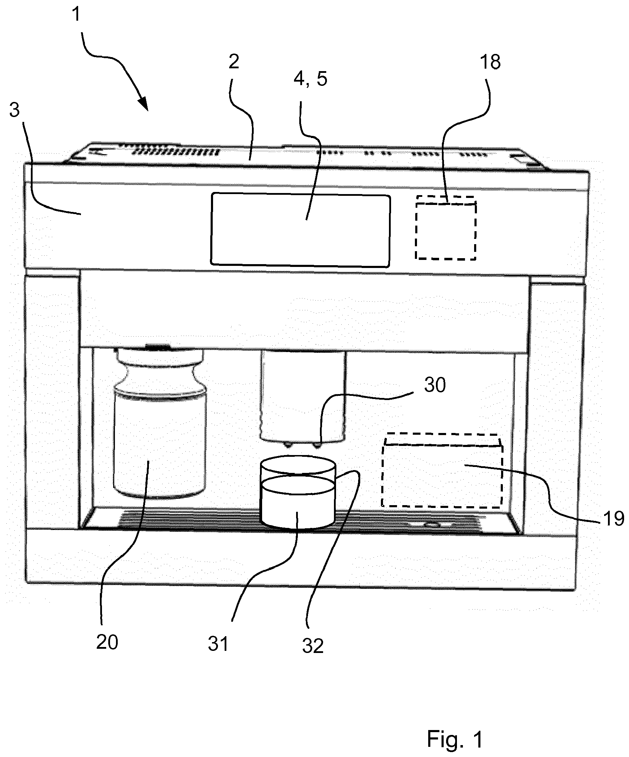

Fig. 1 zeigt einen Kaffeebereiter 1, der ein Gehäuse mit einem frontseitigen Getränkeauslauf 30 umfasst, der in der Höhe verstellbar ausgebildet sein kann zur Verwendung unterschiedlich großer Gefäße 32, und eine Bedienvorrichtung 1 mit Eingabemitteln 4 und Anzeigemitteln 5. Als Eingabemittel ist ein Berührbildschirm 5 oder anders ausgedrückt ein berührungsempfindliches Display 4, 5 (Touchscreen) zur Eingabe von Bedienhandlungen oder Gerätefunktionen vorhanden. Als Anzeigemittel dient das Display 5, das hinter einem Klarsichtbereich der Blende 3 angeordnet ist. Zu erkennen ist ferner, dass sich unterhalb der Bedienvorrichtung 1, bezogen auf die betriebsgemäße Aufstellposition des Gerätes 1, der Getränkeauslauf 30 befindet. Der Getränkebereiter 1 umfasst ferner eine Steuereinrichtung 18, um die im Gerät 1 befindlichen Lasten 19, wie Pumpen, Ventile zum Schalten der notwendigen Flüssigkeitsleitungswege, Heizkörper zum Wasserkochen oder zur Dampferzeugung und das Mahlwerk, zu aktivieren oder deaktivieren, entsprechend des Programmablaufs in der Steuereinrichtung 18 für das jeweils zuzubereitende Getränk. 31. Ein Milchbehälter 20 ist an das Strömungsleitungssystem des Getränkebereiters 1 angeschlossen, um Milch für die Zubereitung von Getränken mit Milch, einem Milchanteil oder Milchschaum bereitzustellen.

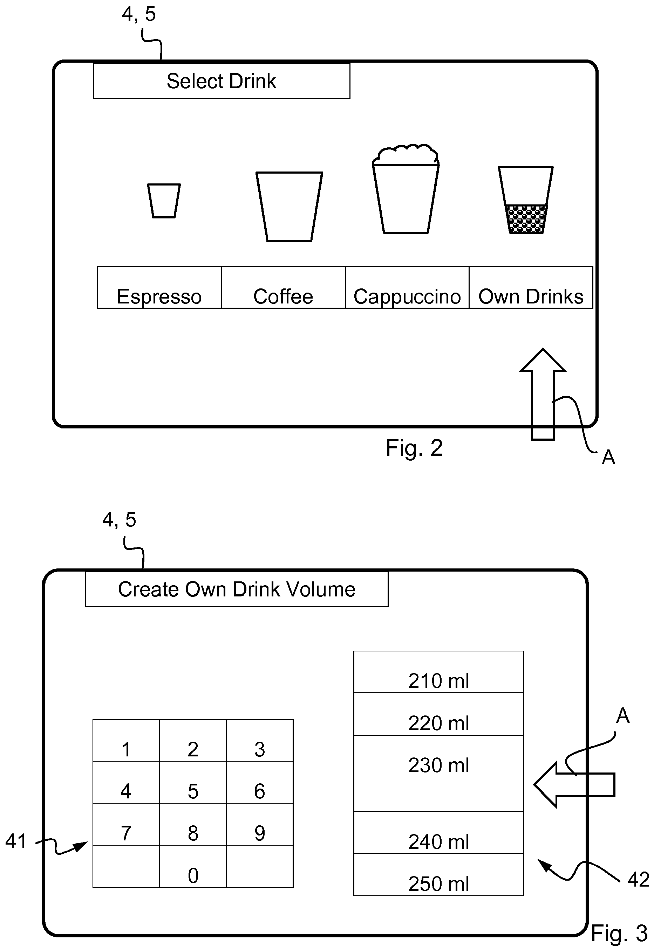

Fig. 2 zeigt als Beispiel den aktiven Berührbildschirm 4, 5 in der Betriebsart, in der in einer Übersichtsdarstellung eine allgemeine Auswahl eines Getränks, wie "Espresso", "Coffee" für Kaffee, "Cappuccino" und weitere Getränkezubereitungen getroffen werden kann. Als weitere Auswahlmöglichkeit wird eine selbst zu kreierende Zubereitung "Own Drink" zur Auswahl angeboten. Die getätigte Auswahl ist hierbei mit dem Pfeil A skizziert, der eine Berührung durch einen Finger symbolisiert.

Nach der Auswahl des frei zu konfigurierenden Getränks "Own Drink" wird in den Erstellungsmodus geschaltet, in dem das Getränk vom Benutzer frei oder nahezu frei zusammengestellt werden kann. Das ist in Fig. 3 durch die Aktivierung des Menues "Create Own Drink" beispielhaft gezeigt. Zunächst wird die Gesamtmenge des fertigen Getränks im Untermenue "Create Own Drink Volume" festgelegt. In dem gezeigten Beispiel ist ein Ziffernblock als animierte Tatstatur 41 dargestellt, um eine Zahleneingabe der Menge in einer festgelegten Einheit, hier Milliliter, bereitzustellen. Alternativ ist eine andere Eingabemöglichkeit mittels einer animierten Walze 42 gegeben.

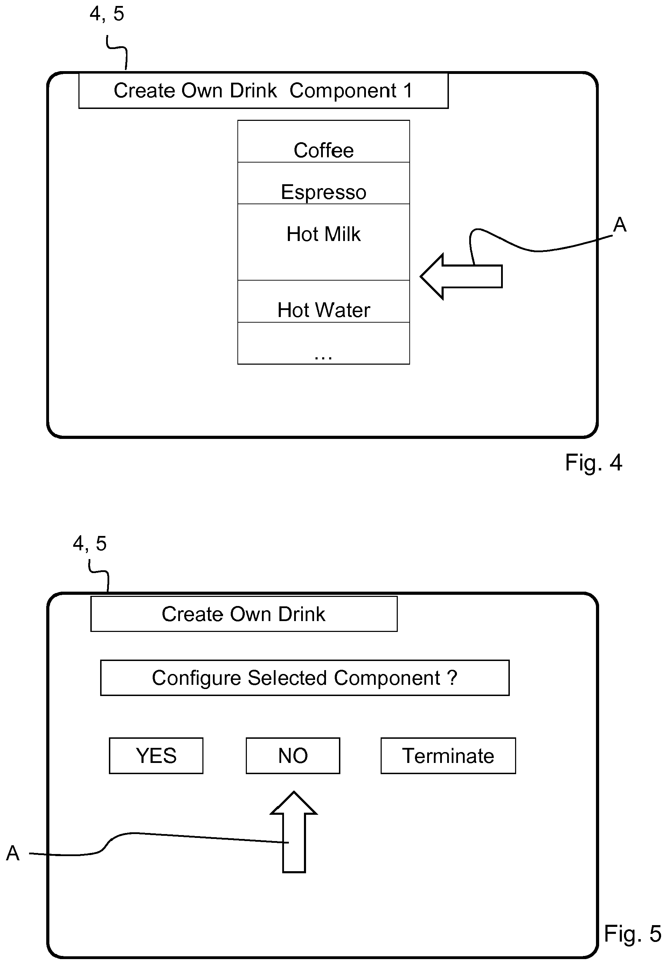

Nach Vollendung der Mengeneigabe folgt die Zusammenstellung der als Blöcke definierten Getränkeanteile. Gemäß Fig. 4 "Create Own Drink Component 1" stehen mehre Getränkezubereitungen als Getränkeanteil zur Auswahl. Zur Darbietung der Auswahlmöglichkeiten ist in dem Beispiel eine animierte Walze mit Textfeldern gezeigt, wobei andere Möglichkeiten, wie eine symbolische Schaltflächen, verwendet werden können. In dem Beispiel wird durch das Auswahlmittel A als erster Getränkeanteil heiße Milch "Hot Milk" ausgewählt.

Wie in Fig. 5 skizziert kann anschließend dieser Getränkeanteil in einem weiteren Untermenue "Configure Selected Component?" genauer eingestellt werden. In dem gezeigten Beispiel wird dies nicht durchgeführt, weil das Auswahlmittel bzw. der Benutzerfinger A aufgrund der Eingabe "No" ablehnt.

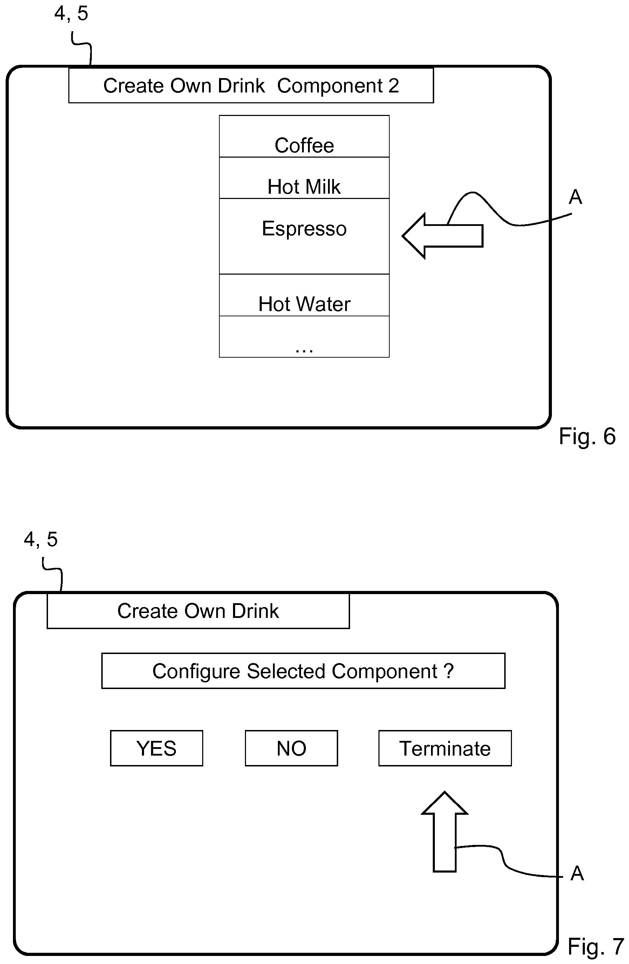

Nach dem Verlassen dieses Abfragefensters wird gemäß Fig. 6 die Auswahl zum Hinzufügen einer weiteren Teilkomponente angeboten, die genauso abläuft, wie vorstehend für das Aussuchen der ersten Teilkomponente beschrieben ist. In dem gezeigten Beispiel wählt der Benutzer als zweite Teilkomponente "Espresso" aus, wie dies mit dem Auswahlmittel A angezeigt ist.

Die weitere Anfrage gemäß Fig. 7 bietet neben der Möglichkeit der weiteren Konfiguration des zuvor ausgewählten Getränkeanteils auch das Beenden der individuellen Getränkezusammenstellung zur Auswahl an. Wie dargestellt wird durch das Auswahlmittel A die Schaltfläche "Terminate" zum Beenden der individuellen Getränkezusammenstellung betätigt.

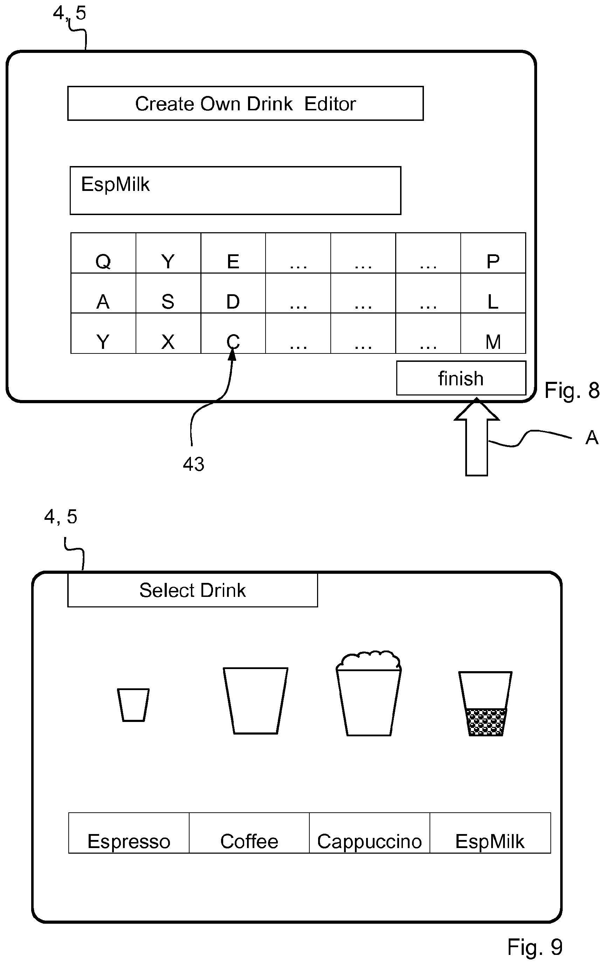

Danach wird gemäß Fig. 8 ein einem weiteren Menue "Create Own Drink Editor" eine alphanumerische Tastatur 43 animiert, um eine Bezeichnung für das zuvor kreierte individuelle Getränk zu vergeben. Mit dieser Bezeichnung, hier dargestellt "EspMilk" wird das individuell zusammengestellt Getränk zur Auswahl im Hauptmenue zur Auswahl angeboten, wie es in Fig. 9 gezeigt ist. Neben den bereits werksmäßig programmierten Getränkezubereitungen, wie Espresso, Kaffee "Coffee", Cappuccino wird zusätzlich "EspMilk" zur direkten Anwahl durch den Benutzer angezeigt und angeboten.

Die Bedien- und Anzeigevorrichtung 4, 5 steht dabei mit der Steuereinrichtung 18 in Wirkverbindung, damit die getätigten und abgespeicherten Einstellungen entsprechend zur Ansteuerung der Aktoren 19 verwendet werden können. Die Mengen werden dabei selbständig festgelegt, wenn der Benutzer keine individuellen Anpassungen für die einzelnen Teilkomponenten vornimmt. Dabei werden bevorzugt die für die Teilkomponenten gängigen Mengen verwendet, so wie es für das Getränk als Einzelbezug normalerweise vorgesehen ist. Dabei kann es passieren, dass es zu Abweichungen hinsichtlich der vorab eingestellten Gesamtmenge kommt.

Solange im Untermenue "Configure Selected Component xx" nicht die Schaltfläche "Terminate" betätigt wird, erfolgt der Einsprung in die Auswahl einer weiteren Teilkomponente, wie es in Fig. 7 skizziert ist. Eine Begrenzung der Anzahl der Teilkomponenten, die für ein einziges Getränk verwendet werden können, ist dabei sinnvoll, beispielsweise auf einen Wert im Bereich von 3 bis 10.

Ferner ist es in einer zweckmäßigen Ausführung vorgesehen, dass mehrere individuell zusammengestellte Getränke abgespeichert und mit einer individuellen Bezeichnung versehen werden können. Diese Mehrzahl von individuellen Getränkezubereitungen werden dem Benutzer mit der zuvor getätigten individuellen Bezeichnung zur Anwahl dargeboten.

## Patentansprüche

1. Programmgesteuerter Getränkebereiter (1) mit einer Steuereinrichtung (18) für einen zur Zubereitung von vorzugsweise heißen Getränken (31) aus zumindest zwei Zutaten (C, W), mit einer mit der Steuereinrichtung in Wirkverbindung stehenden Bedien- und Anzeigevorrichtung (4, 5) mit einem Display (5), auf dem verschiedene Getränke als Feld anzeigbar und mittels Betätigung einer menuegeführten Bedienhandhabe (4) durch einen Benutzer auswählbar und/oder veränderbar sind,
**dadurch gekennzeichnet,**
**dass** die Bedien- und Anzeigevorrichtung (4, 5) dazu ausgebildet ist,
- zumindest eines der auszuwählenden Getränke als individuell zu konfigurierendes Getränk bereitzustellen, und ein Untermenue zur Auswahl bereitzustellen, das zur Auswahl und Eingabe von Parametern sowie für die Auswahl von vordefinierten Getränkezubereitungskomponenten ausgebildet ist;
- das Untermenue mehrmals wiederholt zur Aktivierung bereit zu stellen, um eine Kombination der auszuwählenden, vordefinierten Getränkezubereitungskomponenten als jeweilige Teilmenge zu dem individuellen Getränk zu ermöglichen und
- die Einstellungen für das individuell konfigurierbare Getränk für nachfolgende Auswahl oder Aktivierung zu speichern zur nachfolgenden Steuerung für die Zubereitung des individuell konfigurierten Getränks.

2. Programmgesteuerter Getränkebereiter nach Anspruch 1,
wobei die Bedien- und Anzeigevorrichtung (4, 5) als berührungsempfindliches Display (5, 6) ausgebildet ist zur Bereitstellung der Bedienhandhabe.

3. Programmgesteuerter Getränkebereiter nach einem der Ansprüche 1 oder 2,
**dadurch gekennzeichnet,**
**dass** in einem Untermenue für das frei zu konfigurierbare Getränk die Gesamtmenge des Getränks einstellbar ist, beispielsweise durch eine Mengeneingabe mittels einer Zahl.

4. Programmgesteuerter Getränkebereiter nach Anspruch 2 oder 3,
**dadurch gekennzeichnet,**
**dass** das berührempfindliche Display (4, 5) dazu ausgebildet ist, eine Berührgeste auf dem berührempfindlichen Display auf einem dargestellten Behältersymbol zu erfassen, wodurch die Gesamtmenge des Getränkes (31) in Abhängigkeit der Berührposition auf dem angezeigten Behältersymbol einstellbar ist.

5. Programmgesteuerter Getränkebereiter nach einem der Ansprüche 2 bis 4,
**dadurch gekennzeichnet,**
**dass** berührempfindliche Display (4, 5) dazu ausgebildet ist, ein Untermenue für die Auswahl von vorkonfigurierten Getränkezubereitungen bereitzustellen.

6. Programmgesteuerter Getränkebereiter nach einem der Ansprüche 2 bis 5,
**dadurch gekennzeichnet,**
**dass** berührempfindliche Display (4, 5) dazu ausgebildet ist, ein Untermenue für die Auswahl zum wiederholten Aufrufen eines Untermenues bereitzustellen, welches für weitere Einstellungen bezüglich der ausgewählten Getränkezubereitung dient oder zum Beenden des Konfiguriervorgangs ausgebildet ist.

7. Programmgesteuerter Getränkebereiter nach einem der Ansprüche 2 bis 6,
**dadurch gekennzeichnet**,
das die Bedien- und Anzeigevorrichtung (4, 5) mit dem berührempfindlichen Display dazu ausgebildet ist, eine Symbolanzeige zur Eingabe der Konfiguration bereitzustellen.

8. Programmgesteuerter Getränkebereiter nach Anspruch 7
**dadurch gekennzeichnet**,
das die Bedien- und Anzeigevorrichtung (4, 5) mit dem berührempfindlichen Display Piktogramme zur Auswahl darzustellen, die mittels einer Wischbewegung einem aus dem Display () dargestellten Getränkesymbol zugeführt werden können.

9. Programmgesteuerter Getränkebereiter nach einem der Ansprüche 2 bis 6,
**dadurch gekennzeichnet,**
**dass** berührempfindliche Display (4, 5) dazu ausgebildet ist, die Bedien- und Anzeigevorrichtung (1) eine Balkenanzeige oder Werteeingabe mittels eines Ziffernblocks auf dem Display (5, 6) bereitzustellen.

10. Programmgesteuerter Getränkebereiter nach einem der Ansprüche 1 bis 9
**dadurch gekennzeichnet,**
**dass** die Bedien- und Anzeigevorrichtung (4, 5) dazu ausgebildet ist, eine Bedienhandlung zu ermöglichen zum Umschalten der Bedien- und Anzeigevorrichtung in einen Expertenmodus für weitere Parametereingaben oder Grundeinstellungen.
